# EUROPEAN PATENT SPECIFICATION

(11) **EP 4 551 467 B1**
(45) Date of publication and mention of the grant of the patent: **03.06.2026**
(21) Application number: 23745261.0
(22) Date of filing: 29.06.2023
(51) Int. Cl.: B65D 1/02

(54) **REUSABLE BOTTLE MADE OF PLASTIC**
MEHRWEGFLASCHE AUS KUNSTSTOFF
BOUTEILLE RÉUTILISABLE EN PLASTIQUE

(30) Priority: 07.07.2022 IT 202200014371
(43) Date of publication of application: 14.05.2025
(73) Proprietor: S.I.P.A. Società Industrializzazione Progettazione e Automazione S.p.A., 31029 Vittorio Veneto (IT)
(72) Inventor: BRUGNERA, Nicola, 31028 Vazzola (IT); POLLINI, Michele, 31029 VITTORIO VENETO (IT); VOLPATO, Livio, 31100 SANT'ANGELO (IT); ZANETTE, Dino Enrico, 31010 GODEGA DI SANT'URBANO (IT); ZOPPAS, Matteo, 31015 Conegliano (IT)
(74) Representative: de Alteriis, Renato
(86) International application number: PCT/IB2023/056775
(87) International publication number: WO 2024/009183

(56) References cited:
- EP-A1- 1 471 010
- JP-A- H07 149 336
- US-A- 4 174 782

## Description

### Field of the invention

The present invention relates to the field of reusable plastic bottles. In particular, the invention relates to a reusable bottle for carbonated drinks, in particular for carbonated soft drinks (CSD).

### Background art

Reusable bottles made of plastic for carbonated drinks, in particular for carbonated soft drinks (CSD), are particularly interesting in terms of circular economy.

This type of container must be sanitized before it can be filled and then reused. The sanitization process requires treatment with sodium hydroxide.
Therefore, this type of bottle is subjected to a plurality of washing and filling cycles. The inventors have found that the known bottles have disadvantages. In fact, the number of washing cycles to which they can be subjected is not yet high enough. Furthermore, bottles of this type are still not sufficiently satisfactory in terms of resistance to internal pressure, the increase of which is due to the carbonated drink contained therein.
Furthermore, bottles of this type are still not sufficiently satisfactory in terms of chemical-physical resistance to the carbonated drink contained therein. Therefore, the need is felt to overcome the limits of the prior art.
JPH07149336A and EP1471010A1 represent background art related to the invention described herein.

### Summary of the invention

It is an object of the present invention to produce a reusable bottle made of plastic, in particular made of PET, capable of withstanding a greater number of washing cycles, in particular with sodium hydroxide, with respect to bottles according to the prior art.

It is a particular object of the invention to improve the mechanical features of the bottle without having to increase the amount of material used to make it.

It is a particular object of the invention to produce a bottle having better features, in particular better mechanical features, with respect to the prior art.

It is a particular object of the invention to produce a bottle having a particularly resistant standing ring.

It is a particular object of the invention to produce a bottle which is capable of better withstanding the internal pressure, in particular when it is filled with a carbonated drink.

It is a particular object of the invention to produce a bottle having a chemical-physical resistance to a carbonated drink which is improved with respect to the prior art.

The present invention achieves at least one of such objects, and other objects which will become apparent in the light of the present description, by means of a reusable bottle made of plastic, in particular for carbonated soft drinks, according to claim 1, defining a longitudinal axis, comprising
- an upper portion defining an opening extending about said longitudinal axis;
- a side wall;
- a lower portion, defining a closed bottom;

wherein the lower portion comprises:
   - a heel, in particular an annular heel;
   - a standing ring, extending from the heel and defining the lower standing surface of the bottle;
   - a central dome, in particular concave outwards;
wherein said heel is concave towards the outside of the bottle;
and wherein the projection of the heel on said longitudinal axis has a length from 7 to 14% with respect to the total height of the bottle along the longitudinal axis.

A bottle according to the invention offers numerous advantages including those set out below, in particular by virtue of the heel concave towards the outside and of the aforesaid length of the projection of the heel on said longitudinal axis.

A greater resistance to washing cycles, in particular with sodium hydroxide: tests have been carried out which have shown that a bottle according to the invention is capable of undergoing at least 40 washing cycles, i.e., a very high number of cycles.

Better distribution of the polymer material. In particular, in a bottle according to the invention, versus a conventional bottle, given the same amount of material used, the thickness of the side wall and the wall thickness of the standing ring are greater.

Advantageously, a bottle according to the invention may have a standing ring formed by PET having a particularly high percentage of Trans conformation, greater than a conventional bottle.

Advantageously, a bottle according to the invention may have an inner surface of the standing ring having a particularly high percentage of PET in the Trans conformation.
In particular, the percentage of PET in the Trans conformation on the inner surface of the standing ring may be particularly high.
These aspects are advantageous since the Trans conformation confers rigidity and chemical-physical resistance, for example, to the inner surface that is intended to come into contact with the carbonated drink.

Furthermore, advantageously, a bottle according to the invention may have a percentage of PET in the Trans conformation in the side wall within a particularly narrow range.
This aspect is advantageous since it allows to achieve a better conformation constancy in the production of bottles, and therefore less performance variability.

In the present description, PET values in the Trans conformation were measured by means of the Attenuated total reflection - Fourier transformation infrared (ATR-FTIR) spectrophotometric technique.

Without limitation to theory, PET substantially has two structural conformations: the Gauche conformation, in which the ester groups are on the same side as the ethyl group; and the Trans conformation, in which the ester groups are on sides opposite with respect to the ethyl group.
The Gauche conformation is found only in the amorphous fraction, while the Trans conformation is found in the rigid amorphous fraction and the crystalline fraction. Therefore, the Trans conformation provides an indication of the rigidity of the polymer chains. The Trans conformation allows the polymer chains to move closer to one another, thus creating stronger intramolecular bonds.

Advantageously, in a bottle according to the invention, the standing ring has a rigidity adapted to withstand both the inner pressure and a high number of washing cycles. In fact, advantageously, the conformation of the lower portion of the bottle allows a stretching of the polymer chains, such that the percentage of PET in the Trans conformation in the standing ring is suitably increased, and furthermore the wall thickness of the standing ring is increased with respect to a conventional bottle, given the same amount of material used.

Advantageously, furthermore, a bottle according to the invention allows a distribution of the material such that it has a side wall which has an adequate elasticity to withstand the internal pressure, and also an adequate rigidity to prevent the deformation thereof.

The invention also relates to a component of a mold, or mold bottom, according to claim 13.

Further features and advantages of the invention will become more apparent in the light of the detailed description of exemplary, but non-exclusive embodiments thereof.
The dependent claims describe particular embodiments of the invention.

### Brief description of the drawings

In the description of the invention, reference is made to the accompanying drawings, which are provided by way of non-limiting example, in which:
Fig. 1 shows a perspective view of a bottle according to the invention;
Fig. 2 shows a front view of part of the bottle of Figure 1;
Fig. 3 shows section A-A in Figure 2;
Fig. 4 shows a top plan view of a component of a mold adapted to mold the lower portion of the bottle of Figure 1;
Fig. 5 shows section B-B in Figure 4.
The same elements or components have the same reference numerals.

### Description of embodiments of the invention

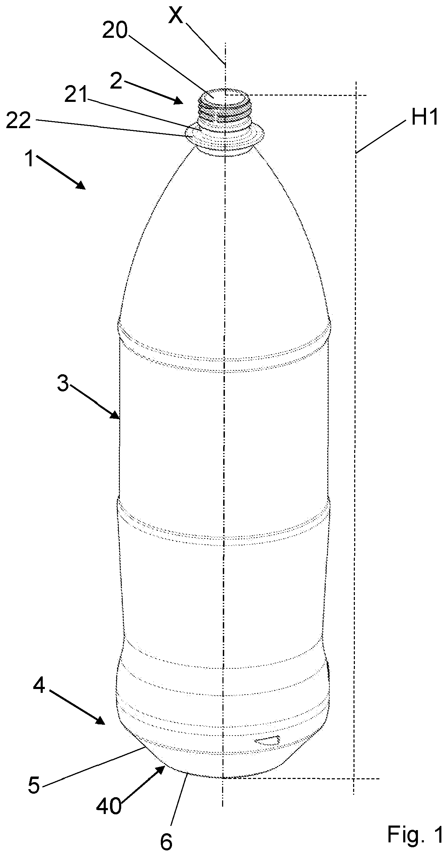

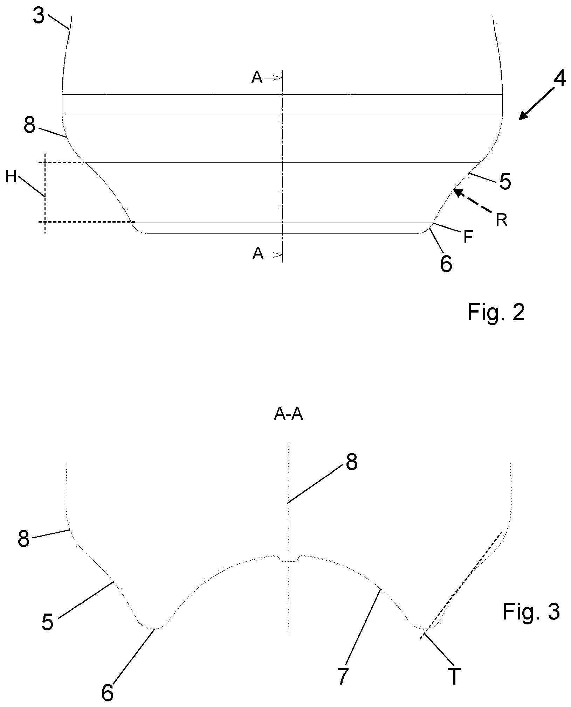

With reference to Figures 1, 2 and 3, exemplary embodiments are described of a reusable bottle 1 made of plastic, in particular for carbonated soft drinks, according to the invention.
In all embodiments, the bottle 1 defines a longitudinal axis X and comprises
- an upper portion 2 defining an opening 20 extending about said longitudinal axis X;
- a side wall 3;
- a lower portion 4, defining a closed bottom 40;
wherein the lower portion 4 comprises:
- a heel 5, in particular an annular heel;
- a standing ring 6, extending from the heel 5 and defining the lower standing surface, or support surface, of the bottle 1;
- a central dome 7, in particular concave outwards.

Advantageously, said heel 5 is concave towards the outside of the bottle 1. In particular, the heel 5 is formed by an annular portion, completely extending about the axis X, the outer surface of which is concave, in particular completely concave, towards the outside of the bottle 1. The inner surface of the heel 5, in particular, is convex inwards.

Advantageously, furthermore, the projection H of the heel 5 on said longitudinal axis X has a length (or height) from 7 to 14% with respect to the total height H1 of the bottle 1 along the longitudinal axis X.

Optionally, the aforesaid projection H of the heel 5 on said longitudinal axis X has a length (or height) from 8 to 11% with respect to the total height H1 of the bottle 1 along the longitudinal axis X.

In particular, the aforesaid total height H1 extends from the lower end of the bottle 1, defined by the standing ring 6, to the upper end of the bottle 1, defined by said upper portion 2.

Preferably, the heel 5 has a radius of curvature R from 100 to 1000 mm, preferably from 300 to 600 mm.

Preferably, the projection H of the heel 5 on said longitudinal axis X has a length from 20 to 45 mm or from 20 to 38 mm.

Preferably, the tangent line T to the inner surface of the heel 5 forms an acute angle with axis X, preferably from 30° to 40°, or from 35° to 39°, for example equal to about 38°. The aforesaid angle is, in particular, the angle proximal to the bottle 1.

The heel 5, in particular, is between the standing ring 6 and the side wall 3. The heel 5, in particular, extends downwards with respect to the side wall 3, in particular downwards and inwards.

The standing ring 6 is preferably convex towards the outside of the bottle 1.

Preferably, there is an inflection point F between the heel 5 and the standing ring 6.

Preferably, the lower portion 4 comprises an annular portion 8, convex towards the outside of the bottle 1, extending from the heel 5 upwards. In particular, said annular portion 8 is arranged between the heel 5 and the side wall 3. Preferably, said annular portion 8 is adjacent to both the heel 5 and the side wall 3. Alternatively, the annular portion 8 may also have a different shape, or it may not be provided. In the latter case, the heel 5 extends directly from the side wall 3.

In all the embodiments, preferably, the heel 5 is radially more inwards with respect to the side wall 3. In other words, the heel 5 extends inwardly with respect to the side wall 3. The heel 5 and the side wall 3 are, in particular, coaxial with respect to each other. When the annular portion 8 is present, preferably, the heel 5 is radially more inwards with respect to said annular portion 8.

The central dome 7 is concave or substantially concave outwardly (i.e., convex inwardly). The central dome 7, in particular, extends upwards with respect to said standing ring 6. In other words, the central dome 7 is recessed with respect to the standing ring 6. The central dome 7, in particular, is radially more inwards with respect to the standing ring 6.

The upper portion 2, in particular, comprises the neck 21 of the bottle 1. The neck 21 preferably comprises a threaded portion, so as to allow screwing a cap capable of closing the opening 20. The neck 21 is preferably provided with an annular flange 22, also called neck ring.

The side wall 3 is, in particular, between the upper portion 2 and the heel 5. The side wall 3 is, in particular, below the upper portion 2 and above the heel 5.

Preferably and advantageously, with respect to a conventional bottle of the same weight, a bottle 1 according to the invention has a greater wall thickness of the side wall 3 and/or a greater wall thickness of the standing ring 8 and/or a lesser wall thickness of the central dome 7.

Preferably, with respect to a conventional bottle, in a bottle 1 according to the invention the percentage increase in the wall thickness of the side wall 3 is from 9% to 12% (for example is equal to about +9.8%) and/or the percentage increase in the wall thickness of the standing ring 6 is from 12% to 18% (for example from +12.5% to +13%) and/or the reduction in the wall thickness of the central dome 7 is from 3% to 7% (for example, from -3.4% to -6.1%).

By way of explanation and not by way of limitation, preferably, for a bottle 1 having, for example but not exclusively, a capacity of 3 liters, the wall thickness of the side wall 3 is from 0.67 to 0.68 mm and/or the wall thickness of the standing ring 6 is from 2.25 to 2.33 mm and/or the wall thickness of the central dome 7 is from 3.85 to 4.01 mm. In particular, preferably, with respect to a conventional bottle, given the same weight, a 3 liter bottle according to the invention has a wall thickness of the side wall 3 which is about 9.8% greater; a wall thickness of the standing ring 6 which is from 12.5% to 13% greater and a wall thickness of the central dome 7 which is from 3.4% to 6.1% lesser.

In all the embodiments, the bottle 1 is preferably made of polyethylene terephthalate (PET).

Preferably, and advantageously, the percentage of PET in the Trans conformation in the standing ring 6 is at least 29%, preferably from 29% to 32%, preferably from 29.7% to 31.2%.

Preferably, and advantageously, the percentage of PET in the Trans conformation in the side wall 3 is at least 39%, preferably from 39% to 52%, preferably from 39.6% to 51.3%.

Preferably, and advantageously, the percentage of PET in the Trans conformation of the inner surface of the standing ring 6 is at least 45%, preferably from 45% to 49%, preferably from 46.8% to 48.5%.

Preferably, the percentage of PET in the Trans conformation of the outer surface of the standing ring 6 is from 12% to 14%, preferably from 12.6 to 13.8%.

Values relating to a preferred example of the bottle 1 according to the invention are set out below. Values relating to a conventional bottle, of the type having an outward convex heel, are also set out. In order to be able to make a comparison, conventional bottles and bottles according to the invention having the same weight (i.e., made with the same amount of material), were considered.

In Table 1 the values of PET in the Trans conformation in the side wall and in the standing ring are reported.

| **Table 1** | | |
|---|---|---|
| | INVENTION Trans% | CONVENTIONAL Trans% |
| Side wall | 39.6 - 51.3 | 42.1 - 56.2 |
| Standing ring | 29.7 - 31.2 | 23.8 - 25.1 |

Table 2 shows the values of PET in the Trans conformation on the inner surface of the standing ring and on the outer surface of the standing ring.

| **Table 2** | | |
|---|---|---|
| | INVENTION Trans% | CONVENTIONAL Trans% |
| Inner surface of the standing ring | 46.8 - 48.5 | 34.1 - 36.1 |
| Outer surface of the standing ring | 12.6 - 13.8 | 13.6 - 14.1 |

Advantageously, a bottle 1 according to the invention has on average a higher percentage of PET in the Trans conformation with respect to a conventional bottle. Therefore, a bottle 1 according to the invention has a greater chemical-physical resistance with respect to a conventional bottle.
This was confirmed by the number of washing cycles. In particular, tests have been carried out which have shown that a bottle 1 according to the invention is capable of undergoing at least 40 washing cycles without being damaged, i.e., a number of cycles approximately 10 times greater with respect to a conventional bottle.

Advantageously, in particular, the conformation of the lower portion of the bottle allows a better stretching of the polymer chains in the standing ring, such that the percentage of PET in the Trans conformation in the standing ring is suitably increased, in particular on the inner surface of the standing ring.

The increase in the percentage of PET in the Trans conformation which is obtained in a bottle 1 according to the invention is from 34% to 37% for the inner surface of the standing ring 6, which is adapted to contact the carbonated drink. For the outer surface of the standing ring 6, a decrease of 2% to 8% was observed.

The shape of the lower portion 4 of the bottle 1 according to the invention allows a better distribution of the polymer material in the standing ring 6 and also allows to obtain a higher percentage of PET in the Trans conformation on the inner surface of the standing ring 6, whereby a greater chemical-physical resistance is obtained.

Therefore, a bottle 1 according to the invention may also be made with less material with respect to a conventional bottle, without loss of performance.

Advantageously, as already mentioned, a bottle 1 according to the invention may have a wall thickness of the side wall 3 and/or of the standing ring 6 greater with respect to a conventional bottle. Furthermore, a bottle 1 according to the invention may preferably have a wall thickness of the central dome 7 which is lower with respect to a conventional bottle.

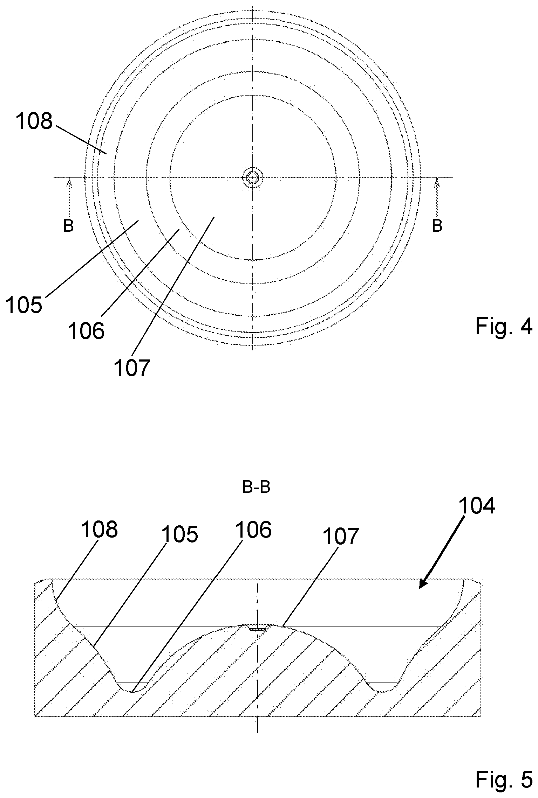

With reference to Figures 4 and 5, the invention also relates to a component 100 of a mold, or mold bottom, configured to mold said lower portion 4 of a bottle 1.

In particular, the component 100 has a molding surface 104 comprising:
- a first surface portion 105, which is annular, convex and adapted to mold said heel 5;
- a second surface portion 106, which is annular, concave and adapted to mold said standing ring 6;
- a third surface portion 107 adapted to mold said central dome 7.

In particular, said first annular surface portion 105 and said second annular surface portion 106 are adjacent to each other.

In particular, said first surface portion 105 is convex so as to allow molding the heel 5 concave towards the outside of the bottle 1.

Preferably, said molding surface 104 also comprises a fourth portion of annular surface 108 adapted to mold said annular portion 8. Preferably, said portion of annular surface 108 is concave, so as to allow molding an annular portion 8 convex outwards.

## Claims

1. A reusable bottle (1) made of plastic, in particular for carbonated soft drinks, defining a longitudinal axis (X), comprising
- an upper portion (2) defining an opening (20) extending about said longitudinal axis (X);
- a side wall (3);
- a lower portion (4), defining a closed bottom (40);
wherein the lower portion (4) comprises:
- a heel (5), in particular an annular heel;
- a standing ring (6), extending from the heel (5) and defining the lower standing surface of the bottle (1);
- a central dome (7), in particular concave outwards;
wherein said heel (5) is concave towards the outside of the bottle (1);
**characterized in that** the projection (H) of the heel (5) on said longitudinal axis (X) has a length from 7 to 14% with respect to the total height (H1) of the bottle (1) along the longitudinal axis (X).

2. A bottle (1) according to claim 1, wherein the projection (H) of the heel (5) on said longitudinal axis (X) has a length from 8 to 11% with respect to the total height (H1) of the bottle (1) along the longitudinal axis (X).

3. A bottle (1) according to claim 1 or 2, wherein the heel (5) has a radius of curvature (R) from 100 to 1000 mm, preferably from 300 to 600 mm.

4. A bottle (1) according to any one of the preceding claims, wherein the projection (H) of the heel (5) on said longitudinal axis (X) has a length from 20 to 45 mm.

5. A bottle (1) according to any one of the preceding claims, wherein the projection (H) of the heel (5) on said longitudinal axis (X) has a length from 20 to 38 mm.

6. A bottle (1) according to any one of the preceding claims, wherein the tangent line (T) to the inner surface of the heel (5) forms an acute angle from 30° to 40°, or from 35° to 39°, with said longitudinal axis (X).

7. A bottle (1) according to any one of the preceding claims, wherein an inflection point (F) is present between the heel (5) and said standing ring (6).

8. A bottle (1) according to any one of the preceding claims, wherein the standing ring (6) is convex towards the outside of the bottle (1).

9. A bottle (1) according to any one of the preceding claims, made of PET.

10. A bottle (1) according to claim 9, wherein the percentage of PET in the Trans conformation in the standing ring (6) is at least 29%, preferably from 29% to 32%, preferably from 29.7% to 31.2%.

11. A bottle (1) according to claim 9 or 10, wherein the percentage of PET in the Trans conformation of the inner surface of the standing ring (6) is at least 45%, preferably from 45 to 49%, preferably from 46.8 to 48.5%.

12. A bottle (1) according to any one of the preceding claims, wherein said lower portion (4) comprises an annular portion (8), convex towards the outside of the bottle (1), extending from the heel (5) upwards; in particular, arranged between the heel (5) and said side wall (3).

13. A mold component (100), or mold bottom, configured to mold said lower portion (4) of a bottle (1) according to any one of the preceding claims, wherein the projection (H) of the heel (5) on said longitudinal axis (X) has a length from 7 to 14% with respect to the total height (H1) of the bottle (1) along the longitudinal axis (X).

14. A component (100) according to claim 13, having a molding surface (104) comprising:
- a first surface portion (105), which is annular, convex and adapted to mold said heel (5);
- a second surface portion (106), which is annular, concave and adapted to mold said standing ring (6);
- a third surface portion (107) adapted to mold said central dome (7);
in particular, wherein said first annular surface portion (105) and said second annular surface portion (106) are adjacent to each other.

## Patentansprüche

1. Mehrwegflasche (1) aus Kunststoff, insbesondere für kohlensäurehaltige Erfrischungsgetränke, die eine Längsachse (X) definiert und umfasst
- einen oberen Abschnitt (2), der eine Öffnung (20) definiert, die sich um die Längsachse (X) erstreckt;
- eine Seitenwand (3);
- einen unteren Abschnitt (4), der einen geschlossenen Boden (40) definiert; wobei der untere Abschnitt (4) umfasst:
- einen Absatz (5), insbesondere einen ringförmigen Absatz;
- einen Standring (6), der sich von dem Absatz (5) erstreckt und die untere Standfläche der Flasche (1) definiert;
- eine zentrale Wölbung (7), insbesondere nach außen konkav;
wobei der Absatz (5) in Richtung der Außenseite der Flasche (1) konkav ist;
**dadurch gekennzeichnet, dass** der Vorsprung (H) des Absatzes (5) auf der Längsachse (X) eine Länge von 7 bis 14% in Bezug auf die Gesamthöhe (H1) der Flasche (1) entlang der Längsachse (X) aufweist.

2. Flasche (1) nach Anspruch 1, wobei der Vorsprung (H) des Absatzes (5) auf der Längsachse (X) eine Länge von 8 bis 11 % in Bezug auf die Gesamthöhe (H1) der Flasche (1) entlang der Längsachse (X) aufweist.

3. Flasche (1) nach Anspruch 1 oder 2, wobei der Absatz (5) einen Krümmungsradius (R) von 100 bis 1000 mm, vorzugsweise von 300 bis 600 mm, aufweist.

4. Flasche (1) nach einem der vorhergehenden Ansprüche, wobei der Vorsprung (H) des Absatzes (5) auf der Längsachse (X) eine Länge von 20 bis 45 mm aufweist.

5. Flasche (1) nach einem der vorhergehenden Ansprüche, wobei der Vorsprung (H) des Absatzes (5) auf der Längsachse (X) eine Länge von 20 bis 38 mm aufweist.

6. Flasche (1) nach einem der vorhergehenden Ansprüche, wobei die Tangentenlinie (T) zu der Innenfläche des Absatzes (5) mit der Längsachse (X) einen spitzen Winkel von 30° bis 40° oder von 35° bis 39° bildet.

7. Flasche (1) nach einem der vorhergehenden Ansprüche, wobei sich zwischen dem Absatz (5) und dem Standring (6) ein Wendepunkt (F) befindet.

8. Flasche (1) nach einem der vorhergehenden Ansprüche, wobei der Standring (6) in Richtung der Außenseite der Flasche (1) konvex ist.

9. Flasche (1) nach einem der vorhergehenden Ansprüche, die aus PET hergestellt ist.

10. Flasche (1) nach Anspruch 9, wobei der Anteil an PET in der trans-Konformation in dem Standring (6) mindestens 29%, vorzugsweise von 29% bis 32%, besonders bevorzugt von 29,7% bis 31,2% beträgt.

11. Flasche (1) nach Anspruch 9 oder 10, wobei der Anteil an PET in der trans-Konformation der Innenfläche des Standrings (6) mindestens 45%, vorzugsweise von 45% bis 49%, besonders bevorzugt von 46,8% bis 48,5%, beträgt.

12. Flasche (1) nach einem der vorhergehenden Ansprüche, wobei der untere Abschnitt (4) einen ringförmigen Abschnitt (8) umfasst, der in Richtung der Außenseite der Flasche (1) konvex ist und sich von dem Absatz (5) nach oben erstreckt; insbesondere zwischen dem Absatz (5) und der Seitenwand (3) angeordnet.

13. Formelement (100) oder Formboden, das/der zum Formen des unteren Abschnitts (4) einer Flasche (1) nach einem der vorhergehenden Ansprüche konfiguriert ist, wobei der Vorsprung (H) des Absatzes (5) auf der Längsachse (X) eine Länge von 7 bis 14% in Bezug auf die Gesamthöhe (H1) der Flasche (1) entlang der Längsachse (X) aufweist.

14. Element (100) nach Anspruch 13, das eine Formfläche (104) aufweist, umfassend:
- einen ersten Flächenabschnitt (105), der ringförmig, konvex und zum Formen des Absatzes (5) geeignet ist;
- einen zweiten Flächenabschnitt (106), der ringförmig, konkav und zum Formen des Standrings (6) geeignet ist;
- einen dritten Flächenabschnitt (107), der zum Formen der zentralen Wölbung (7) geeignet ist;
wobei insbesondere der erste ringförmige Flächenabschnitt (105) und der zweite ringförmige Flächenabschnitt (106) aneinander angrenzen.

## Revendications

1. Bouteille réutilisable (1) en plastique, en particulier pour boissons gazeuses, définissant un axe longitudinal (X), comprenant
- une portion supérieure (2) définissant une ouverture (20) s'étendant autour dudit axe longitudinal (X) ;
- une paroi latérale (3) ;
- une portion inférieure (4), définissant un fond fermé (40) ;
dans laquelle la portion inférieure (4) comprend :
- un talon (5), notamment un talon annulaire ;
- un anneau d'appui (6), s'étendant à partir du talon (5) et définissant la surface d'appui inferieure de la bouteille (1) ;
- un dôme central (7), notamment concave vers l'extérieur ;
dans laquelle ledit talon (5) est concave vers l'extérieur de la bouteille (1) ;
**caractérisée en ce que** la projection (H) du talon (5) sur ledit axe longitudinal (X) a une longueur de 7 à 14°% par rapport à la hauteur totale (H1) de la bouteille (1) le long de l'axe longitudinal (X).

2. Bouteille (1) selon la revendication 1, dans laquelle la projection (H) du talon (5) sur ledit axe longitudinal (X) a une longueur de 8 à 11 % par rapport à la hauteur totale (H1) de la bouteille (1) le long de l'axe longitudinal (X).

3. Bouteille (1) selon la revendication 1 ou 2, dans laquelle le talon (5) a un rayon de courbure (R) de 100 à 1000 mm, de préférence entre 300 et 600 mm.

4. Bouteille (1) selon l'une quelconque des revendications précédentes, dans laquelle la projection (H) du talon (5) sur ledit axe longitudinal (X) a une longueur de 20 à 45 mm.

5. Bouteille (1) selon l'une quelconque des revendications précédentes, dans laquelle la projection (H) du talon (5) sur ledit axe longitudinal (X) a une longueur de 20 à 38 mm.

6. Bouteille (1) selon l'une quelconque des revendications précédentes, dans laquelle la ligne tangente (T) à la surface interne du talon (5) forme un angle aigu de 30° à 40°, ou de 35° à 39°, avec ledit axe longitudinal (X).

7. Bouteille (1) selon l'une quelconque des revendications précédentes, dans laquelle un point d'inflexion (F) est présent entre le talon (5) et ledit anneau d'appui (6).

8. Bouteille (1) selon l'une quelconque des revendications précédentes, dans laquelle l'anneau d'appui (6) est convexe vers l'extérieur de la bouteille (1).

9. Bouteille (1) selon l'une quelconque des revendications précédentes, réalisée en PET.

10. Bouteille (1) selon la revendication 9, dans laquelle le pourcentage de PET dans la conformation Trans dans l'anneau d'appui (6) est d'au moins 29 %, de préférence de 29 % à 32 %, de préférence de 29,7 % à 31,2 %.

11. Bouteille (1) selon la revendication 9 ou 10, dans laquelle le pourcentage de PET dans la conformation Trans de la surface interne de l'anneau d'appui (6) est d'au moins 45 %, de préférence de 45 à 49 %, de préférence de 46,8 à 48,5 %.

12. Bouteille (1) selon l'une quelconque des revendications précédentes, dans laquelle ladite portion inférieure (4) comprend une portion annulaire (8), convexe vers l'extérieur de la bouteille (1), s'étendant du talon (5) vers le haut ; en particulier, disposée entre le talon (5) et ladite paroi latérale (3).

13. Composant de moule (100), ou fond de moule, configuré pour mouler ladite portion inférieure (4) d'une bouteille (1) selon l'une quelconque des revendications précédentes, dans lequel la projection (H) du talon (5) sur ledit axe longitudinal (X) a une longueur de 7 à 14 % par rapport à la hauteur totale (H1) de la bouteille (1) le long de l'axe longitudinal (X).

14. Composant (100) selon la revendication 13, ayant une surface de moulage (104) comprenant :
- une première portion de surface (105), qui est annulaire, convexe et adaptée pour mouler ledit talon (5) ;
- une deuxième portion de surface (106), qui est annulaire, concave et adaptée pour mouler ledit anneau d'appui (6) ;
- une troisième portion de surface (107) adaptée pour mouler ledit dôme central (7) ;
en particulier, dans lequel ladite première portion de surface annulaire (105) et ladite deuxième portion de surface annulaire (106) sont adjacentes l'une à l'autre.
